# EUROPEAN PATENT APPLICATION

(11) **EP 4 672 699 A1**
(43) Date of publication of application: **31.12.2025**
(21) Application number: 24465541.1
(22) Date of filing: 25.06.2024
(51) Int. Cl.: H04L 41/147, H04L 41/16, H04W 24/04, H04L 41/0677, H04L 41/22, H04L 43/0888, H04L 43/0817

(54) **MACHINE LEARNING MODEL THAT PREDICTS WHETHER THERE IS A NETWORK ELEMENT DEGRADATION**

(71) Applicant: Vodafone Group Services Limited, Newbury RG14 2FN (GB)
(72) Inventor: CIUREA, Marius, London, W2 6BY (GB)
(74) Representative: Boult Wade Tennant LLP

(57) **Abstract**

A computer-implemented method of training a prediction model for determining an operational status of a telecommunications network element is provided. The method includes receiving data representative of a plurality of training operational statuses of a corresponding plurality of network elements, where each network element has output one or more alarms, and where, for each network element, the data representative of the training operational status of that network element includes an indication of the one or more alarms generated by that network element, such that each training operational status is associated with the one or more alarms generated by that network element. The method further includes forming, based on the received data, training data includes a plurality of training data records corresponding to the plurality of network elements, where each training data record includes information representative of: the one or more alarms output by the network element associated with that training data record, and the training operational status of the network element associated with that training data record. The computer-implemented method also includes training, using the training data, the prediction model for determining the operational status of a network element.

## Description

The present disclosure relates to methods, apparatus and software for training a prediction model for determining an operational status of a telecommunications network element. The present disclosure also relates to methods, apparatus and software for determining an operational status of a telecommunications network element.

### BACKGROUND

Mobile telecommunications networks, such as a cellular network, provide wireless network connectivity to devices, typically including a Radio Access Network (RAN) and a Core Network. The RAN is for connecting terminals to the cellular network, whilst the Core Network handles various functions, such as access control, handovers and call routing. The RAN includes network elements, such as base stations, that serve as the interface between the terminals and the Core Network by transmitting and receiving radio signals with the terminals and Core Network. Typically, a large number of RAN elements are distributed across a network.

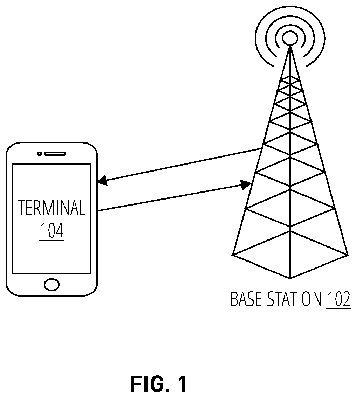

FIG. 1 shows a schematic view of a cell in a cellular network, which is a type of telecommunications network in the art. The cellular network includes a plurality of cells, where each cell includes a RAN element provided as a base station 102 and a plurality of user equipment terminal 104 in communication with one another. Each cell may be considered to be a geographical coverage area associated with its corresponding base station 102 over which the base station 102 can reliably communicate with terminals 104 situated within the geographical coverage area. In at least some examples, a single base station 102 may transmit and receive in a plurality of cells. For example, a base station 102 may simultaneously operate a plurality of antennas which serve different geographical coverage areas. Such a base station 102 may be considered to operate a plurality of different cells.

A cell associated with a base station 102 may be geographically separate from a cell associated with other neighbouring base stations and/or another cell operated by the same base station 102. Alternatively there may be some geographic overlap between different cells operated by the same or different base stations base station 102. A given terminal 104 may be situated within the geographic coverage of a single cell, multiple cells or may be situated in an area where no network coverage is provided (i.e. the terminal is not situated within the coverage area of any cell).

The terminal 104 may be any suitable electronic device capable of connecting to or otherwise communicating with the mobile telecommunications network. Suitable examples of a terminal 104 as referred to herein may include User Equipment devices (UEs) such as mobile telephones, tablets, personal computers etc. and/or other forms of terminal device which may not be directly used by a user. For example, terminals 104 which connect to and communicate over the mobile telecommunications network may or may not include a user interface which allows for direct user interaction with the terminal 104.

In particular, the base station 102 is configured to transmit and receive communication signals over an air interface and comprise at least one antenna configured to exchange communications (e.g. radio frequency signals) with terminal 104 situated within a geographical coverage area (e.g. a cell) serviced by the base station 102 over an air interface. Each base station 102 may exchange communications by transmitting and/or receiving communications in one or more frequency bands assigned to a Radio Access Technology (RAT) used by the base station 102 and utilising communication protocols specified for the RAT (e.g. standardised communication protocols for the RAT). Suitable RATs may include, for example, the Global System for Mobile Communications (GSM), the Universal Mobile Telecommunications System (UMTS), Long Term Evolution (LTE) and/or 5G New Radio (NR). The base stations 102 may take any suitable form and may, for example, comprise a GMS and/or UMTS compatible base station such as a Node B, an Evolved NodeB (eNB) and/or a 5G NR gNodeB. The base stations 102 typically have a backhaul connection with one or more core networks (not shown) with which users of the telecommunications network are registered. For the sake of illustration, only one terminal 104 is shown, but it will be appreciated that a plurality of terminal 104 that are within a communication range of the base station 102 may communicate with the base station 102.

The base station 102 is a telecommunications node providing the interface between the terminal 104 and the wider network. For example, where the network is a 3G (e.g. UMTS) network, the base station 102 is a Node B, where the network is a 4G-LTE network, the base station 102 is an eNodeB, and where the network is a 5G-NR network, the base station 102 is a gNodeB. Base stations include a number of components, typically including:
- an antenna system for transmitting and receiving radio signals;
- a radio system including radio frequency (RF) components connected to the antenna system for performing generation and extraction of radio signals. Examples may include a 4G-LTE Remote Radio Unit connected to the antenna system, and a 5G-NR Radio Unit where the radio and antenna systems are integrated together into e.g. an Active Antenna Unit;
- a control system for transmitting to and receiving data from the Core Network and handling some management functions, such as resource allocation, traffic management, etc.. Examples may include a 4G-LTE Baseband Unit, and 5G-NR Central Unit and Distribution Unit; and
- physical support, such as an electrical power system, backup battery for preventing power failure, transmission equipment and air conditioning system for maintaining the temperature for regular operation.

For completeness, the arrangement of the above components depends on the network architecture. For example, in a fourth generation 4G long term evolution LTE cellular network, base stations provided as eNodeB typically provide the above components separately from one another, with the BBU provided in a cabinet of the base station 102. In fifth generation 5G New Radio (NR) networks, the base stations however provide the control system as the the 4G BBUs into Centralized Units (CU) and Distributed Units (DU) and integrate the 4G RRUs and antennas together into an Active Antenna Unit (AAU) with the DU deployed at the AAU.

Each RAN element is generally programmed to automatically generate an alarm if one or more of its components undergoes a fault, whereby problems are prioritized by radio engineers who correlate alarms to identify fault root causes. For example, alarms may be addressed by operations departments to maintain equipment functionality and enhance customer experience.

It is in this context that the present disclosure has been devised.

### BRIEF SUMMARY

However, not all faults indicated by alarms affect end user experience. For example, data throughput may be an indicator of end user experience, such that there may be cases where alarms are output by one or more components of a network element, but the faults do not interfere with the data throughput such that the operation of the network element does not impact end user experience. For example, alarms may be generated by this equipment in case of issues such as hardware or software faults, power disturbances, or protocol issues like unreachable remote IPs. In particular, alarms can signify minor malfunctions inconsequential to end users or major issues impacting data throughput and end user satisfaction.

The inventors have particularly found that analyzing alarms is a swift method to assess end user impact due to their instantaneous generation, unlike KPIs which involve hourly analyses leading to delays. In particular, the inventors have realised that analysing alarms according to whether data throughput of the network element affects end users using modelling techniques is particularly effective for determining the operational status of the network element. Moreover, training data correlating the operational status of a network element with the alarm data generated by that network element may be used to train a prediction model for determining an operational status of network elements based on alarm data.

According to an aspect of the disclosure, there is provided a computer-implemented method of training a prediction model for determining an operational status of a telecommunications network element. The method includes receiving data representative of a plurality of training operational statuses of a corresponding plurality of network elements, where each network element has output one or more alarms, and where, for each network element, the data representative of the training operational status of that network element includes an indication of the one or more alarms generated by that network element, such that each training operational status is associated with the one or more alarms generated by that network element. The method further includes forming, based on the received data, training data includes a plurality of training data records corresponding to the plurality of network elements, where each training data record includes information representative of: the one or more alarms output by the network element associated with that training data record, and the training operational status of the network element associated with that training data record. The computer-implemented method also includes training, using the training data, the prediction model for determining the operational status of a network element.

An objective of the method is therefore to train a model to evaluate alarm data to predict the physical operational state of network elements. In doing so, the trained prediction model may advantageously predict network degradation and facilitate prioritising network element faults in real-time.

The prediction model may be implemented by an artificial neural network.

The obtained data may comprise historical data.

The prediction model may be trained using supervised learning using the plurality of training data records. Training the prediction model may comprise executing a machine learning algorithm. Supervised learning of a prediction model may involve training the model to map an input to an output based on training data records. The input to the prediction model comprises data representative of training operational statuses and data representative of one or more alarms output by of a corresponding plurality of network elements.

Optionally, the operational status is indicative of whether data throughput of a network element affects end users. In doing so, the operational status is indicative of a data throughput metric, which provides a measure of the volume of data passing through that network element in a given time period, and may also be considered as the traffic flowing through the network element. Since data throughput may be indicative of latency issues, it has been found that data throughput is effectively a good indicator of whether end users are affected by the network element.

Optionally, the training of the prediction model comprises training the prediction model to classify, in dependence of one or more inputs provided to the prediction model, network elements into categories associated with the operational status of the network element. The prediction model may comprise a classification model. For example, the output of the prediction model may comprise one or more classifications representative of an operational status of a network element. The one or more classifications may comprise qualitive labels representative of the operational status of the network element. Such classifications may, for example, include labels such as low, medium, high and/or bad, medium, good etc. Such labels may be associated with a specific measure of an operational status such as data throughput.

Optionally, the categories comprise: a faulty category indicative of data throughput of a network element affecting end users, and a non-faulty category indicative of the data throughput not affecting end users. The categories may further comprise a soon-to-be-faulty category indicative that the data throughput is likely to affect end users in the future.

The prediction model may comprise a regression model. For example, the output of the prediction model may comprise one or more numerical values representative of the operational status of a network element. The one or more numerical values representative of the operational status of the network element may, for example, include a measure of the data throughput of the network element.

The prediction model may comprise a machine learning model. For example, the prediction model may be trained and/or implemented using any suitable machine learning algorithm. Examples, of such suitable algorithms may, for example, include a K-nearest neighbour algorithm, a linear prediction algorithm, a support vector machine (e.g. a support-vector clustering algorithm), a decision tree algorithm, a random forest algorithm, an adaptive boosting (AdaBoost) algorithm, a gradient boosting algorithm, a voting algorithm and/or a stacking algorithm. In some examples, the prediction model may comprise an artificial neural network.

Optionally, the training of the prediction model comprises using a random forest estimator.

Optionally, the computer-implemented method further comprises evaluating the generated outputs.

The evaluation may comprise using a receiver operating characteristic (ROC) curve to evaluate performance.

Optionally, for each training data record, the information representative of the one or more alarms comprises: alarm name, the number of alarms, and the sources of the alarm corresponding to one or more components of the network element associated with that training data record. Each network element may include a number of components, such that each network element may generate a number of alarms indicative of faults. However, not all faults indicated by alarms affect data throughput to end users, such that there may be cases where there is a fault but it does not interfere with the data throughput such that the network element is still operational. For example, if the source is in the board associated with an antenna of a network element, it may affect the data throughput. By taking each of these features into account, the network element can be classified accordingly.

Optionally, each alarm from among the one or more alarms is indicative of a fault associated with a component of a network element.

Optionally, the network element includes a RAN element. The network element may include a base station.

According to another aspect of the disclosure, there is provided a computer implemented method of determining an operational status of a telecommunications network element. The method includes obtaining data associated with at least one network element, each network element among the at least one network element outputting one or more alarms. The method further includes providing the obtained data as an input to a prediction model configured through training to determine an operational status of a network element in dependence of data representative of one or more alarms output by a network element. The method further includes implementing the prediction model to generate an output in dependence of the provided inputs, where the generated output is representative of the operational status of the at least one network element. The prediction model is configured through training based on training data includes a plurality of training data records corresponding to the plurality of network elements. Each training data record includes information representative of: one or more alarms output by the network element associated with that training data record, and a training operational status of the network element associated with that training data record.

Not all faults indicated by alarms affect data throughput to end users, such that there may be cases where there is a fault but it does not interfere with the data throughput such that the network element is still operational. An objective of the method is therefore to evaluate alarm data to determine if network elements are operational, so that degraded network elements can be prioritised for fixing works. The inventors have realised the method as a modelling solution, which is particularly effective at predicting the physical operational state of network elements based on alarm data. In doing, this advantageously facilitates network operators in prioritising network element faults in real-time, whereby network elements determined to impact end user experience may be prioritised.

The obtained data may include active alarm data being output in real-time.

Optionally, the obtained data comprises information representative of the one or more alarms, including: alarm name, the number of alarms, and the sources of the alarm corresponding to one or more components of that network element that have generated the one or more alarms.

Optionally, the computer-implemented method may further comprise generating, based on the determined operational status and location data associated with each network element, a map including location information and the operational status of each network element. Advantageously, the map is for providing a visual guide for prioritising the network elements according to their operational statuses. This system could aid network operators to swiftly identify problems by viewing the map, streamlining actions and minimizing customer impact, as the map effectively functions as a dashboard allowing access to the network overview at any time, based upon the speed of obtaining input data, to pinpoint areas with significant issues. This may be particularly beneficial during certification measurements.

The location information of each network element may comprise geographical coordinate data of the network element. The location information of each network element may be obtained by a satellite navigation system.

Optionally, the computer-implemented method further comprises obtaining new data associated with the at least one network element and updating the map in dependence of the obtained new data.

Optionally, the map includes location information and operational statuses of all network elements in a telecommunications network, wherein network elements that are not outputting any alarms are assigned with a non-faulty operational status. Advantageously, an overview of the entire network may be provided.

Optionally, the computer-implemented method further comprises displaying the map, including representing the operational status of each network element on the map. Advantageously, this provides a visual guide to areas of concern across the whole network. The operational status of each network element may be represented by colour coding. The method may comprise assigning a first colour to network elements determined to be faulty and a second colour to network elements determined to be non-faulty.

According to a further aspect of the disclosure, there is provided a computer program comprising instructions which, when executed, cause the method of any preceding claim to be implemented. The computer program may be stored on a computer readable medium. The computer readable medium may comprise a non-transitory computer readable medium.

According to yet another aspect of the disclosure, there is provided an apparatus for training a prediction model for determining an operational status of a telecommunications network element. The apparatus includes processing circuitry. The apparatus also includes a memory storing instructions which, when executed by the processing circuitry, cause the apparatus to receive data representative of a plurality of training operational statuses of a corresponding plurality of network elements, where each network element has output one or more alarms, and where, for each network element, the data representative of the training operational status of that network element includes an indication of the one or more alarms generated by that network element, such that each training operational status is associated with the one or more alarms generated by that network element. The instructions, when executed by the processing circuitry, cause the apparatus to further form, based on the received data, training data includes a plurality of training data records corresponding to the plurality of network elements, where each training data record includes information representative of: the one or more alarms output by the network element associated with that training data record, and the training operational status of the network element associated with that training data record. The instructions, when executed by the processing circuitry, cause the apparatus to also train, using the training data, the prediction model for determining the operational status of a network element.

According to a yet further aspect of the disclosure, there is provided an apparatus for determining an operational status of a telecommunications network element. The apparatus includes processing circuitry. The apparatus further includes a memory storing instructions which, when executed by the processing circuitry, cause the apparatus to obtain data associated with at least one network element, each network element among the at least one network element outputting one or more alarms. The instructions, when executed by the processing circuitry, cause the apparatus to also provide the obtained data as an input to a prediction model configured through training to determine an operational status of a network element in dependence of data representative of one or more alarms output by a network element. The instructions, when executed by the processing circuitry, cause the apparatus to also implement the prediction model to generate an output in dependence of the provided inputs, where the generated output is representative of the operational status of the at least one network element. The prediction model is configured through training based on training data includes a plurality of training data records corresponding to the plurality of network elements, where each training data record includes information representative of: one or more alarms output by the network element associated with that training data record, and a training operational status of the network element associated with that training data record.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all examples and/or features of any example can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE SEVERAL VIEWS OF THE DRAWINGS

Embodiments of the present invention will now be described by way of further example only and with reference to the accompanying drawings, in which:
FIG. 1 shows a schematic view of a cell in a cellular network in the art.
FIG. 2 illustrates a method 200 of training a prediction model for determining an operational status of a telecommunications network element in accordance with embodiments of the disclosure.
FIG. 3A shows a schematic view of a system for training a prediction model 302 in accordance with embodiments of the disclosure.
FIG. 3B shows a schematic view of a prediction model 302 of the system of FIG. 3A.
FIG. 4 illustrates a schematic view of a system for determining an operational status of a telecommunications network element in accordance with embodiments of the disclosure.
FIG. 5 illustrates a method 500 of determining an operational status of a telecommunications network element in accordance with embodiments of the disclosure.
FIG. 6 shows a map of the operational status of a network in accordance with embodiments of the disclosure.
FIG. 7 shows a schematic view of an apparatus 702 in accordance with embodiments of the disclosure.

### DETAILED DESCRIPTION

Before particular examples of the present invention are described, it is to be understood that the present disclosure is not limited to the particular examples described herein. It is also to be understood that the terminology used herein is used for describing particular examples only and is not intended to limit the scope of the claims.

In describing and claiming the apparatus and methods of the present invention, the following terminology will be used: the singular forms "a", "an", and "the" include plural forms unless the context clearly dictates otherwise. Thus, for example, reference to "a base station" includes reference to one or more of such elements.

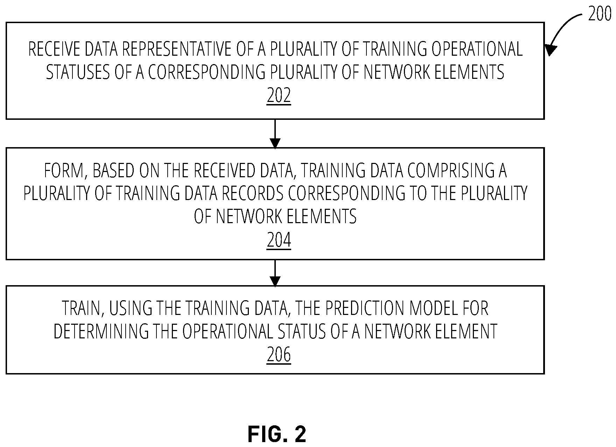

FIG. 2 shows a method 200 of training a prediction model for determining an operational status of a telecommunications network element in accordance with embodiments of the disclosure. An example of a telecommunications network element is a RAN element, such as the base station 102 shown in FIG. 1. The method may be implemented on any suitable computing device. In some examples, each method step may be implemented on the same computing device. In other examples, different parts of the method may be implemented on different computing devices which may be in communication with each other.

In step 202, method 200 receives data representative of a plurality of training operational statuses of a corresponding plurality of network elements. Each network element has output one or more alarms. For each network element, the data representative of the training operational status of that network element includes an indication of the one or more alarms generated by that network element, such that each training operational status is associated with the one or more alarms generated by that network element.

In step 204, method 200 forms, based on the received data, training data comprising a plurality of training data records corresponding to the plurality of network elements. Each training data record comprises information representative of: the one or more alarms output by the network element associated with that trains data record, and the training operational status of the network element associated with that training data record.

In step 206, method 200 trains, using the training data, the prediction model for determining the operational status of a network element.

In doing so, the trained prediction model may advantageously predict network degradation and facilitate prioritising network element faults in real-time. In particular, since not all faults indicated by alarms impact the operational status of network elements, the prediction model trained according to the method 200 is arranged to process data associated with alarms output by network elements to automatically predict whether those alarms are indicative of a fault impacting the operational status of the network elements. In the present embodiment, the operational status is particularly indicative of whether the data throughput of a network element affects end users, as the data throughput is a metric indicative of the volume of data passing through that network element in a given time period, and may also be considered as the traffic flowing through the network element. As such, data throughput may be indicative of latency issues to terminals 104, which impact end user experience, such that data throughput may be a good indicator of whether end users are affected by the network element. In doing, this advantageously aids network operators in prioritising network element faults in real-time, whereby network elements determined to impact end user experience may be prioritised.

The training data records may be considered to comprise at least one input field and at least one output field. The at least one output field represents the desired output of a model trained using the training data. The at least one input field represents inputs to be provided to a trained model in order to determine the output of the model. In accordance with examples contemplated herein, the at least one input field of each training data record comprises the data representative of the one or more alarms output by the network element with which the training data record is associated. The at least one output field may comprise the training operational status with which the training data record is associated, represented as one or more numerical values (e.g. belonging to a continuous range of values) and/or may comprise one of more classifications such as one or more qualitive labels.

Although not shown, step 202 may in some embodiments include processing the received data before forming the training data in step 204. This may include any suitable processing such as data processing, cleaning and preparing the received data in a format suitable for training the prediction model.

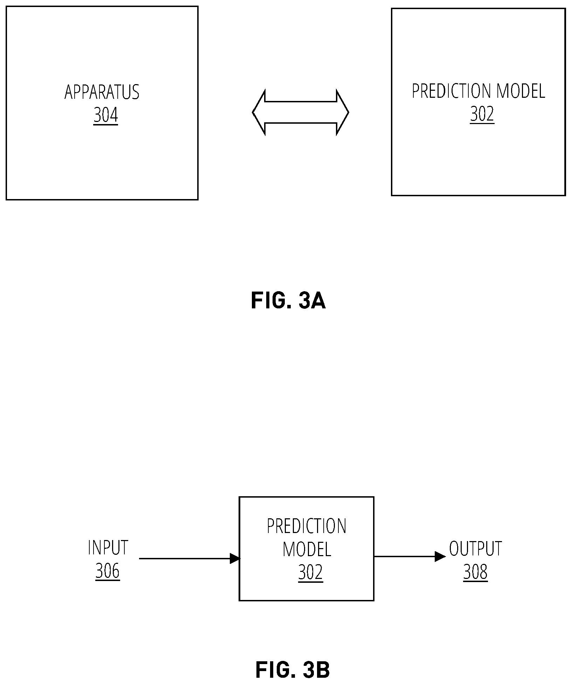

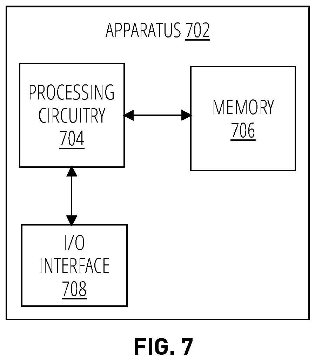

FIG. 3A shows a system for training a prediction model 302 in accordance with embodiments of the disclosure. The system includes an apparatus 304 and a prediction model 302 arranged to communicate with one another. The apparatus 304 is for training the prediction model 302 to determine an operational status of a telecommunications network element and may be implemented to perform the method 200. The telecommunications network element may include any suitable network element, such as a RAN element e.g. the base station 102 in FIG. 1. The apparatus 304 may be any suitable computing device, including at least processing circuitry, a memory and an input/output I/O interface, each of which will be described in more detail in relation to FIG. 7. It will be appreciated that the formulated training data may be stored internally on the apparatus 304 (e.g. on an internal storage memory) and/or externally (e.g. on a remote apparatus such as a server or a suitable external storage device).

FIG. 3B shows a schematic view of the prediction model 302 being trained by the apparatus 304 in the system of FIG. 3A. The prediction model is arranged to receive an input 306 and process the input 306 to generate an output 308. The prediction model 302 is trained using the plurality of training data records formulated at step 204. The prediction model 302 is trained for determining an operational status of a telecommunications network element dependent on training operational statuses indicative of one or more alarms generated for the network elements. In the present embodiment, the prediction model is a classification model, For example, the output of the prediction model may comprise one or more classifications (also referred to herein as categories) representative of an operational status of a network element. The one or more categories may comprise qualitive labels representative of the operational status of the network element. In the present embodiment, the categories comprise at least a faulty category indicative of data throughput of a network element affecting end users, and a non-faulty category indicative of the data throughput not affecting end users. In some embodiments, the categories further comprise a soon-to-be-faulty category indicative that the data throughput is likely to affect end users in a given time period in the future. The disclosure is not limited to this however and any suitable classifications may be used, including labels such as low, medium, high and/or bad, medium, good etc. Such labels may be associated with a specific measure of an operational status such as data throughput.

However, it will be appreciated the disclosure is not limited to this and in some embodiments, the prediction model may be a regression model or any suitable machine learning model. For example, in embodiments where the prediction model comprises a regression model, the output of the prediction model may comprise one or more numerical values representative of the operational status of a network element. The one or more numerical values representative of the operational status of the network element may, for example, include a measure of the data throughput of the network element. In embodiments where the prediction model comprises a machine learning model, the prediction model may be trained and/or implemented using any suitable machine learning algorithm. Examples of such suitable algorithms may, for example, include a K-nearest neighbour algorithm, a linear prediction algorithm, a support vector machine (e.g. a support-vector clustering algorithm), a decision tree algorithm, a random forest algorithm, an adaptive boosting (AdaBoost) algorithm, a gradient boosting algorithm, a voting algorithm and/or a stacking algorithm. In some examples, the prediction model may comprise an artificial neural network.

The training of the prediction model in step 206 may comprise applying a supervised machine learning training algorithm to train the machine learning model. As will be appreciated by those of ordinary skill in the art, supervised learning of a prediction model involves training the model to map an input to an output based on training data records. In this instance, the input to the prediction model comprises data representative of one or more alarms output by network elements and the output comprises data representative of training operational statuses of the network elements. The training data records formed in step 204 forms the training data used in a supervised learning of the prediction model. Supervised training of the prediction model may comprise determining parameters of the prediction model which map the input fields of the training data records to the output fields of the training data records to a desired accuracy. In particular, the output of the training process typically comprises a plurality of determined parameters of the prediction model which best matches the input fields of the training data to the output fields of the training data.

Any suitable prediction model and training algorithm may be used. In some examples, the prediction model comprises a regression model. For example, the output of the regression model may comprise one or more numerical values belonging to a continuous range of values. In some examples, the prediction model comprises a classification model. For example, the output of the classification model may comprise one or more classifications (e.g. in the form of qualitive labels) which are representative of the operational status of base stations.

Examples of suitable algorithms may include a K-nearest neighbour, a linear regression algorithm, a support vector machine (e.g. a support-vector clustering algorithm), a decision tree algorithm, a random forest algorithm, an adaptive boosting (AdaBoost) algorithm, a gradient boosting algorithm, a voting algorithm and/or a stacking algorithm. In some examples, a deep learning algorithm may be used to train an artificial neural network.

As discussed above, the apparatus 304 may be used to implement the method 200. More particularly, the apparatus 304 may perform step 204 by receiving the data representative of the plurality of training operational statuses. In the present embodiment, the training operational statuses correspond to labels assigned to network elements, such as the classification categories described above including a faulty category indicative of data throughput of a network element affecting end users, and a non-faulty category indicative of the data throughput not affecting end users. These labels may be assigned by a skilled person such as a radio engineer who can correlate alarms to identify faults. For example, the training operational statuses are received via an input to the apparatus 304, and are then usable for supervised learning.

The apparatus 304 may be used to implement step 206 by forming, based on the received data, training data comprising a plurality of training data records corresponding to the plurality of network elements. Here, each formulated training data record includes information representative of the one or more alarms output by the corresponding network element and the training operational status of that network element. As such, the alarm information and training operational status are mapped to one another. The alarm information for each network element may be historical data corresponding to network elements in a network, whereby the apparatus 304 is arranged to retrieve the historical alarm information and associated network element information from e.g. a database. In the present embodiment, the alarm information includes the alarm name, the source of the alarm and the number of alarms generated for the network element associated with that training data record. In particular, the source of the alarm corresponds to a specific part of the component of the network element that has generated the alarm, whereby the part pinpoints the fault indicating the alarm. Taking for example the base station 102 as the network element, components of the base station 102 may include the antenna system, radio system, control system, etc., each of which include a plurality of parts, which can generate alarms when faults associated with the part arise. The alarm source(s) may therefore indicate the part(s) of the base station 102 generating the alarm(s). More particularly, one or more alarms may be generated for each network element, whereby each alarm is generated by a corresponding part of the base station 102. In the present embodiment, the training data records are provided in a table, an example of which is shown in Table 1 for training data records 1 to n:

**Table 1:**

| Training data record | Network element | Alarm name(s) | Alarm source(s) | Number of alarms | Training operational status |
|---|---|---|---|---|---|
| 1 | NE(1) | Alarm(a) | Source (NE(1)) | 3 | 2 |
| 2 | NE(2) | Alarm(x) | Source (NE(2)) | 4 | 2 |
| 3 | NE(3) | Alarm(y) | Source (NE(3)) | 1 | 1 |
| 4 | NE(4) | Alarm(z) | Source (NE(4)) | 6 | 0 |
| ... | ... | ... | ... | ... | ... |
| n | NE(n) | Alarm(n) | Source (NE(5)) | 1 | 1 |

As shown in Table 1 above, the training operational status is provided in the present embodiment as a numerical value indicative of a category. In this case, training operational status 2 is a label which may be assigned by the networker operator (such as a radio engineer) indicative of a faulty category indicative of the data throughput affecting end users (e.g. providing latency issues with reduced data throughput flowing through the base station 102 to the terminal 104). Training operational status 1 is indicative of a soon-to-be-faulty category indicative that the data throughput is likely to affect end users in the future (e.g. not providing latency issues yet, but likely to do so within a period of time). Training operational status 0 is indicative of a non-faulty category indicating that the data throughput does not affect end users (e.g. the base station 102 is undergoing normal operation without any latency issues and no expected latency issues in the foreseeable future).

In some examples, the training data records may include additional data. For example, a training data record may include one or more further properties based on the alarms generated by the network element.

In some examples, a process of feature engineering may be performed to generate further data to include in the training data records. The feature engineering may be based on the training data, and particularly the information representative of alarms output by the network element with which the training record is associated. Feature engineering may derive one or more features based on a combination of features of the data representative of alarm information. For example, one or more features such as data throughput flowing through the network element may be derived based the alarm information. Any features derived through feature engineering may be included in the training data records.

The apparatus 304 may then be implemented to perform step 206 to train the prediction model 302 using supervised learning based on the training data as described above. In order to facilitate this, the apparatus 304 may optionally convert any non-numeric values in the formulated training data (e.g. the Table 1 above) into numeric values so that the prediction model may process the training data effectively. The apparatus 304 may additionally mark the training data including the network element, alarm names, alarm sources and number of alarms as features, and mark the training data including the training operational statuses as targets for each training data record, such that the prediction model can seek patterns in the features to map the features to the targets during supervised learning.

In at least some examples, the trained prediction model 302 may be evaluated for accuracy. For example, a first subset of the available training data records may be used to train the prediction model. A second subset of the available training data records may then be used to evaluate the trained prediction model for accuracy. The evaluation of the trained prediction model may comprise providing the input fields of the second subset of the training records as inputs to the trained prediction model and implementing the trained prediction model to generate an output dependent on the inputs. The output of the prediction model may then be compared to output fields of the second subset of the training records.

If the trained prediction model 302 had a perfect accuracy then the output of the implemented prediction model would match the output fields of the training records used to provide inputs to the prediction model. However, in practice no model has perfect accuracy and there will be some error difference between the model output and the output fields of the training records. The model error may be analysed and used to assess the accuracy of the trained prediction model. Any suitable evaluation means may be used. For example, in the present embodiment where the prediction model is the above described classification model, a Receiver Operating Characteristic (ROC) curve may be generated by the apparatus 304 to evaluate the performance of the prediction model 302, whereby the false positive rate is plotted against the true positive rate.

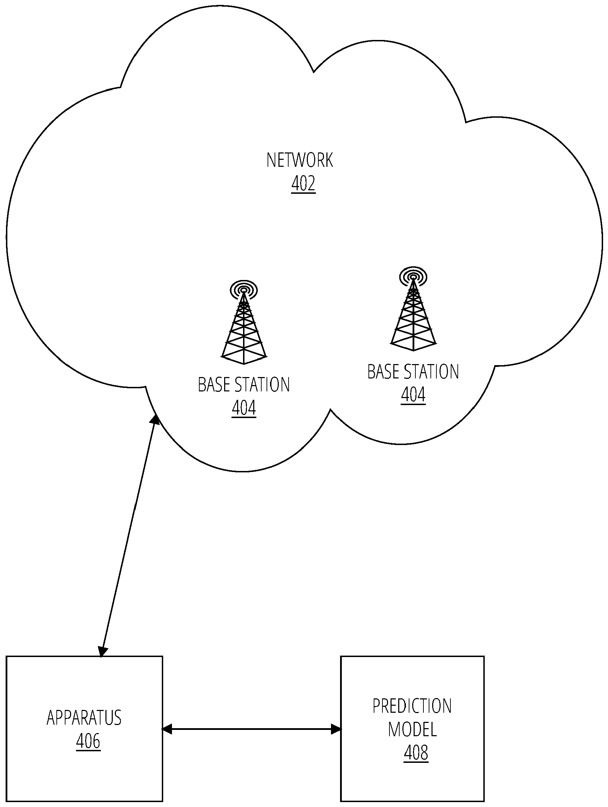

FIG. 4 shows a schematic view of a system for determining an operational status of a telecommunications network element in accordance with embodiments of the disclosure. The system includes a telecommunications network 402 (such as the cellular network described herein e.g. in relation to FIG. 1) including a plurality of base stations 404. The system further includes an apparatus 406 and a prediction model 408 trained for determining operational statuses of the base stations 404. In the present embodiment, the prediction model 408 may be trained according to any of the methods described above with reference to FIGS. 2, 3A and 3B.

In the present embodiment, the prediction model 408 is a classification model, but it will be appreciated that the disclosure is not limited to this and the prediction model 408 may be a regression model and/or a machine learning model implemented e.g. by an artificial neural network.

The apparatus 406 may be any suitable computing electronic device including processing circuitry and a memory, which will be described in more detail in relation to FIG. 7. The apparatus 406 is arranged to communicate with the network 402 and also with the prediction model 408.

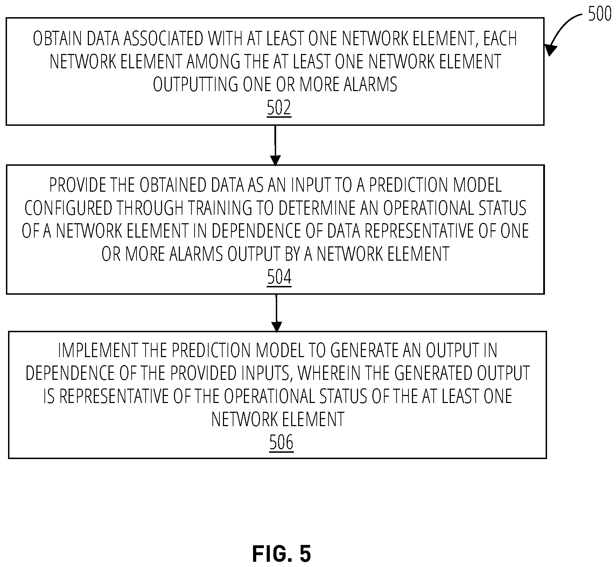

FIG. 5 shows a method 500 of determining an operational status of a telecommunications network element in accordance with embodiments of the disclosure. In particular, the method 500 may be performed following the training method 200 of FIG. 2. The method may be implemented on any suitable computing device. In some examples, each method step may be implemented on the same computing device. In other examples, different parts of the method may be implemented on different computing devices which may be in communication with each other. One or more of the method steps may be performed by the apparatus 406.

In step 502, method 500 obtains data associated with at least one network element, each network element among the at least one network element outputting one or more alarms.

In step 504, method 500 provides the obtained data as an input to a prediction model configured through training to determine an operational status of a network element in dependence of data representative of one or more alarms output by a network element.

In step 506, method 500 implements the prediction model to generate an output in dependence of the provided inputs. The generated output is representative of the operational status of the at least one network element. The prediction model is configured through training based on training data comprising a plurality of training data records corresponding to the plurality of network elements, wherein each training data record comprises information representative of: one or more alarms output by the network element associated with that trains data record, and a training operational status of the network element associated with that training data record.

Here, the prediction model may be configured through training using any of the methods described above with reference to FIGS. 2, 3A and 3B. In particular, the prediction model 408 in FIGS. 4 and 5 may be considered to be the trained prediction model 302 in FIGS. 2, 3A and 3B i.e. following training and operating in the inference mode.

In the present embodiment, the prediction model is a classification model, for example, the output of the prediction model may comprise one or more classifications (also referred to herein as categories) representative of an operational status of a network element. The one or more categories may comprise qualitive labels representative of the operational status of the network element. In the present embodiment, the categories comprise at least a faulty category indicative of data throughput of a network element affecting end users, and a non-faulty category indicative of the data throughput not affecting end users. In some embodiments, the categories further comprise a soon-to-be-faulty category indicative that the data throughput is likely to affect end users in a given time period in the future. The disclosure is not limited to this however and any suitable classifications may be used, including labels such as low, medium, high and/or bad, medium, good etc. Such labels may be associated with a specific measure of an operational status such as data throughput.

However, it will be appreciated the disclosure is not limited to this and in some embodiments, the prediction model may be a regression model or any suitable machine learning model. For example, in embodiments where the prediction model comprises a regression model, the output of the prediction model may comprise one or more numerical values representative of the operational status of a network element. The one or more numerical values representative of the operational status of the network element may, for example, include a measure of the data throughput of the network element. In embodiments where the prediction model comprises a machine learning model, the prediction model may be trained and/or implemented using any suitable machine learning algorithm. Examples of such suitable algorithms may, for example, include a K-nearest neighbour algorithm, a linear prediction algorithm, a support vector machine (e.g. a support-vector clustering algorithm), a decision tree algorithm, a random forest algorithm, an adaptive boosting (AdaBoost) algorithm, a gradient boosting algorithm, a voting algorithm and/or a stacking algorithm. In some examples, the prediction model may comprise an artificial neural network.

In the present embodiment, the obtained data is associated with the plurality of base stations 404 and includes alarm information relating to alarms generated by the base stations 404. The alarm information is particularly representative of the one or more alarms, including alarm name(s), alarm source(s) and the number of alarms. More particularly, the obtained data includes active alarm data, so as to facilitate real-time analysis of operational statuses of a network. Here, active alarm data corresponds to alarm data that is being output in real-time. For example, the obtained data may each have the same timestamp. The obtained data may further include the most recent network data, so as to be reflective of the network 402 in real-time. For example, with reference to FIG. 4, the apparatus 406 is arranged to obtain the data associated with the base stations 404 by retrieving the data associated with base stations 404 from the network 402. The apparatus 406 may retrieve this data by any suitable means, for example from a database within the network 402 collating data associated with the base stations 404, or directly from the base stations 404 themselves.

The apparatus 406 may then perform step 504 to provide the obtained data as an input to the prediction model 408, which has been trained (e.g. via the method 200) to determine an operational status of each base station 404. The prediction model 408 is then arranged to process the obtained data to generate an output representative of the operational statuses of the base stations 404. In the present embodiment, the operational statuses correspond to the same categories as the training operational statuses described in relation to FIG. 2, including the faulty category, non-faulty category and soon-to-be-faulty category, and will therefore not be described again here in the interests of conciseness.

It will be appreciated that there may be some cases where some base stations 404 in the network 402 are non-operational but are not generating alarms, and/or disconnected from the network 402 and/or the base station 404 is unable to transmit signals indicating any alarms that have been generated within the network 402, for example where the control system of the base station 404 (e.g. BBU in 4G-LTE eNodeB or CU/DU in 5G-NR gNodeB) is nonfunctioning. In some embodiments (not shown), the apparatus 406 may obtain information about such base stations 404 (i.e. non-operational base stations 404, which are not outputting any alarms), and provide the prediction model 408 with the obtained information as an input to determine the operational status of those base stations 404. For example, where a base station 404 is disconnected from the network 402, the apparatus 406 may provide information relating to the disconnection of the base station 404 as an input to the prediction model 408. The prediction model 408 may process the input to determine that the base station 404 has faults that impact the end user experience (e.g. the data throughput is affected) and generate its output to label the disconnected base station 404 with the faulty category, even though no alarm data for that base station 404 has been received by the apparatus 406. It has been found that this provides a reliable prediction tool (that disconnected base stations 404 may be labelled with the faulty category) because in practice, the majority of disconnected base stations 404 are disconnected due to faults that impact end user experience (such as impacting data throughput).

In some embodiments, once the operational statuses have been generated by the prediction model 408 following step 506, the method 500 further comprises generating, based on the determined operational status and location data associated with each network element, a map including location information and the operational status of each network element. In such embodiments, the location information of each network element comprises geographical coordinate data of the network element, which may be obtained by a navigation system, such as a satellite navigation system (e.g. the Global Positioning System (GPS)). With reference to FIG. 4, the location data associated with each base station 404 (corresponding to the aforementioned network element) may be retrieved by the apparatus 406 by any suitable means. For example, the location data may form part of the obtained data in step 502, such that the apparatus 406 retrieves the location data of the base stations 404 from the network 402 together with the alarm information. In other examples, the location data may be stored on the apparatus 406 or retrieved from a database.

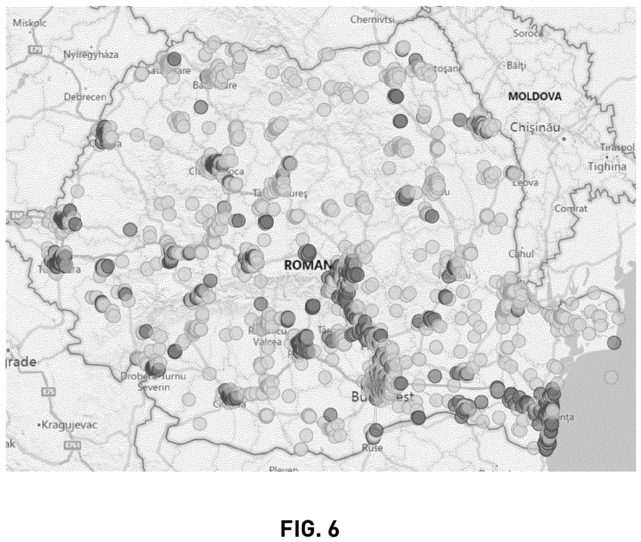

In embodiments where the method includes generating the map, the method 500 may then comprise displaying the generated map. FIG. 6 shows such an example of the display of the map in accordance with embodiments of the disclosure. Whilst FIG. 6 shows a specific example of a displayed map of a telecommunications network in Romania, it will be appreciated that this is for illustrative purposes and may be applied for any country or region having a telecommunications network. The map may be displayed by the apparatus 406, and/or displayed on a separate apparatus (not shown) in communication with the apparatus 406.

As shown in FIG. 6, the displayed map indicates the location information and operational status of every base station 404 within the network 402. More particularly, whilst the obtained data in step 502 may only correspond to the base stations 404 that have generated alarms, the map shows every base station 404 within the network 402 including those base stations 404 which have not generated any alarms, so as to give an overview of the entire network 402. In the present embodiment, those base stations 404 which have not generated any alarms are assigned with the non-faulty category as their operational status. For example, the apparatus 406 may be arranged to automatically assign any base stations 404 which have not generated any alarms with the non-faulty category label.

In the present embodiment of FIG. 6, the operational status of each base station 404 in the network 402 is indicated by colour coding. In particular, base stations 404 determined to have an operational status classified in the non-faulty category are colour coded green, whilst base stations 404 determined to have an operational status classified in the faulty category are colour coded red. It will be appreciated that the disclosure is not limited to colour coding, and any suitable representation of the base stations 404 that visually indicate their operational status may be implemented. In doing so, the map is for providing a visual guide for prioritising the network elements according to their operational statuses. This system could aid network operators to swiftly identify problems by viewing the map, streamlining actions and minimizing impact on end users, as the map effectively functions as a dashboard allowing a visual access to the network overview at any time, based upon the speed of obtaining input data, to pinpoint areas with significant issues. This may be particularly beneficial during certification measurements. Furthermore, network degradation may be identified by network operators (such as radio engineers), where the network degradation corresponds to areas of the network 402 indicated as being faulty as indicated by e.g. base stations 404 classified as having operational status in the faulty category, which may for example cluster in regions.

In some embodiments, the map may be updated with new data indicative of any new alarms being generated, so as to be representative of the network 402 in real-time. In such embodiments, the method 500 may comprise periodically monitoring the network 402 in case any base stations 404 generate new alarms. When any new active alarm data is monitored, the method 500 may comprise retrieving the new active alarm data, and providing the new active alarm data as an input to the prediction model 408 in accordance with step 504, such that the prediction model 408 process its provided inputs to generate an output indicative of the operational status of the network elements associated with the new active alarm data. If the operational status of any base stations 404 has changed in light of the new active alarm data, the map may be updated to reflect the newly determined operational status. For example, where a particular base station 404 that previously was indicated to have been non-faulty is now determined to be faulty following newly obtained data, the map in FIG. 6 may be updated to change the colour coding from green to red.

Various computer implemented methods and devices have been described above. In general any method described herein may be implemented on one or more electronic devices. FIG. 7 is a schematic illustration of an apparatus 702, which is an example electronic device which may be used to implement all or part of any method described herein. The general structure of the apparatus 702 depicted in FIG. 7 may be applicable to any terminal, base station and/or any other electronic device contemplated herein.

The apparatus 702 includes processing circuitry 704, a memory 706 and an input/output I/O interface 708.

The processing circuitry 704 may include be implemented by any suitable processer and/or combination of processors. For example, the processing circuitry 704 may be implemented by one or more of a Central Processing Unit (CPU) and a Graphical Processing Unit (GPU).

The memory 706 may include volatile memory and/or non-volatile/persistent memory. The memory 706 may, for example, be used to store data such as an operating system, instructions to be executed by the processing circuitry 704 (e.g. in the form of software to be executed by the processing circuitry 704), configuration information related to the apparatus 702, session information and/or configuration or registration information associated with any other device, node or module in a telecommunications network, such as the cellular network described in FIG. 1. For example, the memory 706 may be used to store data representative of one or more alarms associated with at least one network element. In some examples, the memory 706 may be used to store instructions for executing any of the methods disclosed herein.

At least the processing circuitry 704 is connected to the I/O interface 708. The I/O interface 708 facilitates communication with one or more other devices, network nodes or modules in a network, and includes communication circuitry to facilitate this communication. For example, the I/O interface 708 may be operable to transmit and/or receive communications to/from other devices in a network. In some examples, the I/O interface 708 may be operable to transmit and/or receive communications over an air interface. For example, the I/O interface 708 may include a transmitter and/or a receiver for transmitting and/or receiving wireless communication (e.g. radio frequency signals). In some examples, the I/O interface 708 may include a transceiver configured to receive and transmit wireless communication (e.g. radio frequency signals). In some examples, the I/O interface 708 may be operable to additionally or alternatively communicate over one or more wired connections.

Optionally, the apparatus 702 may further include a display. For example, where the apparatus 702 is a UE, the UE may include a display for displaying information to a user of the UE. The display may comprise any suitable electronic display such as a touch sensitive display. The display may be connected to at least to the processing circuitry 704. The processing circuitry 704 may generate display signals which are sent to the display in order to cause the display information.

Optionally, the apparatus 702 further includes an input unit arranged to receive a user input. The display together with the input unit may incorporate for example a graphical user interface (GUI).

In the interest of conciseness not all possible alternatives which fall within the scope of the present disclosure have been explicitly discussed herein. As the skilled person will appreciate, in the present disclosure any aspect discussed from the perspective of an element being operable to do an action also discloses the same feature from the perspective of a method including a method step corresponding to the action. Similarly, any discussion presented from the perspective of a method step also discloses the same features from the perspective of any one or more suitable elements being operable or configured to carry out some or all of the method step. It is also considered within the present disclosure that for any method step(s), there can be a computer program configured to carry out, when executed, the method step(s).

Within the context of the present disclosure a device, such as a terminal, a base station, or a network module or node, is generally considered from a logical perspective, as the element carrying out the appropriate function. Any such device may be implemented using one or more physical elements as deemed appropriate. For example, it may be implemented in one (or more) of: a standalone physical device, in two or more separate physical devices, in a distributed system, in a virtual environment using any suitable hardware or hardware combination, etc.

Further example implementations can be realised comprising one or more features of any herein described implementation taken jointly and severally in any and all permutations. Yet further example implementations may also be realised by combining features of one or more of the appended claims with one or more selected features of any example implementation described herein.

The prediction model may be implemented by a corresponding computing device. The computing device may include any suitable computing device. For example, each computing device may have substantially the same components as the apparatus 702 described herein.

Where functional units have been described as circuitry, the circuitry may be general purpose processor circuitry configured by program code to perform specified processing functions. The circuitry may also be configured by modification to the processing hardware. Configuration of the circuitry to perform a specified function may be entirely in hardware, entirely in software or using a combination of hardware modification and software execution. Program instructions may be used to configure logic gates of general purpose or special-purpose processor circuitry to perform a processing function.

Circuitry may be implemented, for example, as a hardware circuit comprising custom Very Large Scale Integrated, VLSI, circuits or gate arrays, off-the-shelf semiconductors such as logic chips, transistors, or other discrete components. Circuitry may also be implemented in programmable hardware devices such as field programmable gate arrays, FPGA, programmable array logic, programmable logic devices, A System on Chip, SoC, graphics processing units, GPU, or the like.

Machine readable program instructions may be provided on a transitory medium such as a transmission medium or on a non-transitory medium such as a storage medium. Such machine readable instructions (computer program code) may be implemented in a high level procedural or object oriented programming language. However, the program(s) may be implemented in assembly or machine language, if desired. In any case, the language may be a compiled or interpreted language, and combined with hardware implementations. Program instructions may be executed on a single processor or on two or more processors in a distributed manner.

For the purposes of the description, a phrase in the form "A / B" or in the form "A and/or B" means (A), (B), or (A and B). For the purposes of the description, a phrase in the form "at least one of A, B, and C" means (A), (B), (C), (A and B), (A and C), (B and C), or (A, B and C).

The foregoing description has been given by way of example only and it will be appreciated by a person skilled in the art that modifications can be made without departing from the scope of the present invention as defined by the claims.

## Claims

1. A computer-implemented method of training a prediction model for determining an operational status of a telecommunications network element, the method comprising:
receiving data representative of a plurality of training operational statuses of a corresponding plurality of network elements, wherein each network element has output one or more alarms, and wherein, for each network element, the data representative of the training operational status of that network element includes an indication of the one or more alarms generated by that network element, such that each training operational status is associated with the one or more alarms generated by that network element;
forming, based on the received data, training data comprising a plurality of training data records corresponding to the plurality of network elements, wherein each training data record comprises information representative of:
the one or more alarms output by the network element associated with that training data record, and
the training operational status of the network element associated with that training data record; and
training, using the training data, the prediction model for determining the operational status of a network element.

2. The computer-implemented method of claim 1, wherein the operational status is indicative of whether data throughput of a network element affects end users.

3. The computer-implemented method of claim 1 or 2, wherein the training of the prediction model comprises training the prediction model to classify, in dependence one or more inputs provided to the prediction model, network elements into categories associated with the operational status of the network element.

4. The computer-implemented method of claim 3, wherein the categories comprise: a faulty category indicative of data throughput of a network element affecting end users, and a non-faulty category indicative of the data throughput not affecting end users.

5. The computer-implemented method of any one of the preceding claims, further comprising evaluating the generated outputs.

6. The computer-implemented method of any one of the preceding claims, wherein, for each training data record, the information representative of the one or more alarms comprises:
alarm name,
the number of alarms, and
the sources of the alarm corresponding to one or more components of the network element associated with that training data record.

7. A computer implemented method of determining an operational status of a telecommunications network element, the method comprising:
obtaining data associated with at least one network element, each network element among the at least one network element outputting one or more alarms;
providing the obtained data as an input to a prediction model configured through training to determine an operational status of a network element in dependence of data representative of one or more alarms output by a network element; and
implementing the prediction model to generate an output in dependence of the provided inputs, wherein the generated output is representative of the operational status of the at least one network element,
wherein the prediction model is configured through training based on training data comprising a plurality of training data records corresponding to the plurality of network elements, wherein each training data record comprises information representative of:
one or more alarms output by the network element associated with that training data record, and
a training operational status of the network element associated with that training data record.

8. The computer-implemented method of claim 7, wherein the obtained data comprises information representative of the one or more alarms, including:
alarm name,
the number of alarms, and
the sources of the alarm corresponding to one or more components of that network element that have generated the one or more alarms.

9. The computer-implemented method of claim 7 or 8, further comprising generating, based on the determined operational status and location data associated with each network element, a map including location information and the operational status of each network element.

10. The computer-implemented method of claim 9, further comprising obtaining new data associated with the at least one network element and updating the map in dependence of the obtained new data.

11. The computer-implemented method of claim 9 or 10, wherein the map includes location information and operational statuses of all network elements in a telecommunications network, wherein network elements that are not outputting any alarms are assigned with a non-faulty operational status.

12. The computer-implemented method of any one of claims 9 to 11, further comprising displaying the map, including representing the operational status of each network element on the map.

13. A computer program comprising instructions which, when executed, cause the method of any preceding claim to be implemented.

14. Apparatus for training a prediction model for determining an operational status of a telecommunications network element, the apparatus comprising:
processing circuitry; and
memory storing instructions which, when executed by the processing circuitry, cause the apparatus to:
receive data representative of a plurality of training operational statuses of a corresponding plurality of network elements, wherein each network element has output one or more alarms, and wherein, for each network element, the data representative of the training operational status of that network element includes an indication of the one or more alarms generated by that network element, such that each training operational status is associated with the one or more alarms generated by that network element,
form, based on the received data, training data comprising a plurality of training data records corresponding to the plurality of network elements, wherein each training data record comprises information representative of:
the one or more alarms output by the network element associated with that training data record, and
the training operational status of the network element associated with that training data record, and
train, using the training data, the prediction model for determining the operational status of a network element.

15. Apparatus for determining an operational status of a telecommunications network element, the apparatus comprising:
processing circuitry; and
memory storing instructions which, when executed by the processing circuitry, cause the apparatus to:
obtain data associated with at least one network element, each network element among the at least one network element outputting one or more alarms,
provide the obtained data as an input to a prediction model configured through training to determine an operational status of a network element in dependence of data representative of one or more alarms output by a network element, and
implement the prediction model to generate an output in dependence of the provided inputs, wherein the generated output is representative of the operational status of the at least one network element,
wherein the prediction model is configured through training based on training data comprising a plurality of training data records corresponding to the plurality of network elements, wherein each training data record comprises information representative of:
one or more alarms output by the network element associated with that training data record, and
a training operational status of the network element associated with that training data record.
